# EUROPEAN PATENT SPECIFICATION

(11) **EP 2 222 584 B1**
(45) Date of publication and mention of the grant of the patent: **03.07.2024**
(21) Application number: 08865494.2
(22) Date of filing: 18.12.2008
(51) Int. Cl.: B65F 5/00, B65G 53/24

(54) **METHOD IN PNEUMATIC MATERIAL CONVEYING SYSTEM AND A PNEUMATIC MATERIAL CONVEYING SYSTEM**
VERFAHREN BEI PNEUMATISCHEN MATERIALBEFÖRDERUNGSSYSTEM UND PNEUMATISCHES MATERIALBEFÖRDERUNGSSYSTEM
PROCÉDÉ MIS EN OEUVRE DANS UN SYSTÈME DE TRANSPORT DE MATIÈRES PNEUMATIQUE ET SYSTÈME DE TRANSPORT DE MATIÈRES PNEUMATIQUE ASSOCIÉ

(30) Priority: 21.12.2007 FI 20075950; 24.01.2008 FI 20085058
(43) Date of publication of application: 01.09.2010
(73) Proprietor: Maricap OY, 01450 Vantaa (FI)
(72) Inventor: SUNDHOLM, Göran, FI-04310 Tuusula (FI)
(74) Representative: Papula Oy
(86) International application number: PCT/FI2008/050756
(87) International publication number: WO 2009/080880

(56) References cited:
- WO-A1-2005/085104
- DE-A1- 2 307 194
- FR-A1- 2 271 140
- GB-A- 1 435 611
- GB-A- 1 435 611
- JP-B2- H0 658 436
- JP-U- S 471 889
- US-A- 3 809 438
- US-A- 4 108 498
- US-A- 4 318 643

## Description

### Background of invention

The invention relates to a method for feeding and conveying material in a pneumatic material conveying system according to claim 1.

The invention further relates to a pneumatic material conveying system according to claim 8.

The invention relates generally to pneumatic conveying systems, such as vacuum conveying systems, particularly to collecting and conveying waste, such as conveying household waste.

Systems are known in which waste is conveyed in a piping by means of suction. In these, waste is conveyed for long distances in the piping by suction. Apparatuses are utilised, inter alia, for conveying waste in different institutions. Typical for them is that a vacuum apparatus is used for achieving a pressure difference, in which apparatus underpressure in the conveying pipe is provided with vacuum generators, such as vacuum pumps or an ejector apparatus. In the conveying pipe, there is typically at least one valve element by opening and closing of which make-up air coming in the conveying pipe is regulated. The vacuum conveying systems typically contain, inter alia, the following problems: high energy consumption, high air flow in the piping, problems with noise, dust and fine particles in the outlet pipe. US4108498 discloses a garbage suction plant having a number of garbage chutes connected to a common, substantially horizontal transport duct leading to a separator device of a collection centre having a suitable air suction means, is provided with specially constructed air inlet valves at selected locations. The plant is configured to discharge, by means of the suction created by the suction means, the contents of the feed pipe nearest to the separator device first and then the contents of the feed pipe further away from the separator device.

An object of this invention is to achieve a totally novel arrangement into connection with material conveying systems by means of which the disadvantages of known arrangements are avoided. A second object of the invention is to provide an arrangement applicable for vacuum conveying systems by means of which the noise problems of material feed can be decreased.

### Brief description of invention

The invention is based on an idea in which the material feed of feed points of a pneumatic material conveying system to the conveying pipe is controlled in a specified sequence so that a passage from the previous feed point to the conveying pipe has not closed before a passage of the next feed point to the conveying pipe opens.

The method according to the invention is characterised by the features of claim 1.

In addition, the method according to the invention can comprise the features of claims 2-7.

Furthermore, the material conveying system according to the invention is characterised by the features of claim 8.

The arrangement according to the invention has numerous significant advantages.

By opening and closing the feed points of the system according to the invention, the material is provided with an effective transfer into and conveyance in the conveying pipe when, at the same time, the noise effect caused by the operation of the system can be minimised. By arranging the conveying pipe of the material conveying system to consist of operating areas i.e. partial circuits, it is possible to effectively arrange the conveyance of the material in the conveying piping and emptying the feed points into the conveying pipe. By arranging the piping of the system to comprise a circuit where at least part of conveying air circulates, the volume of outlet air can be decreased. At the same time, the energy consumption of the system is minimised. By maintaining underpressure and simultaneously blowing, it is possible to provide an effective circulation of conveying air in the circuit and conveyance of material in the conveying pipe. With the arrangement according to the invention, it is possible to decrease the volume of outlet air substantially and simultaneously to decrease possible problems with dust and fine particles in the outlet pipe. The arrangement according to the invention also substantially decreases the noise problem caused by prior art. Moisture accumulated in the piping is minimised and the piping can be dried by circulating air in the piping. As the volume of air being sucked inside decreases, also energy consumption decreases.

### Brief description of figures

In the following, the invention will be described in detail by means of an example with reference to the accompanying drawings in which
Fig. 1 schematically shows a system according to an embodiment of the invention,
Fig. 2 schematically shows a system according to a second embodiment of the invention and
Fig. 3 schematically shows a system according to a third embodiment of the invention.

### Detailed description of invention

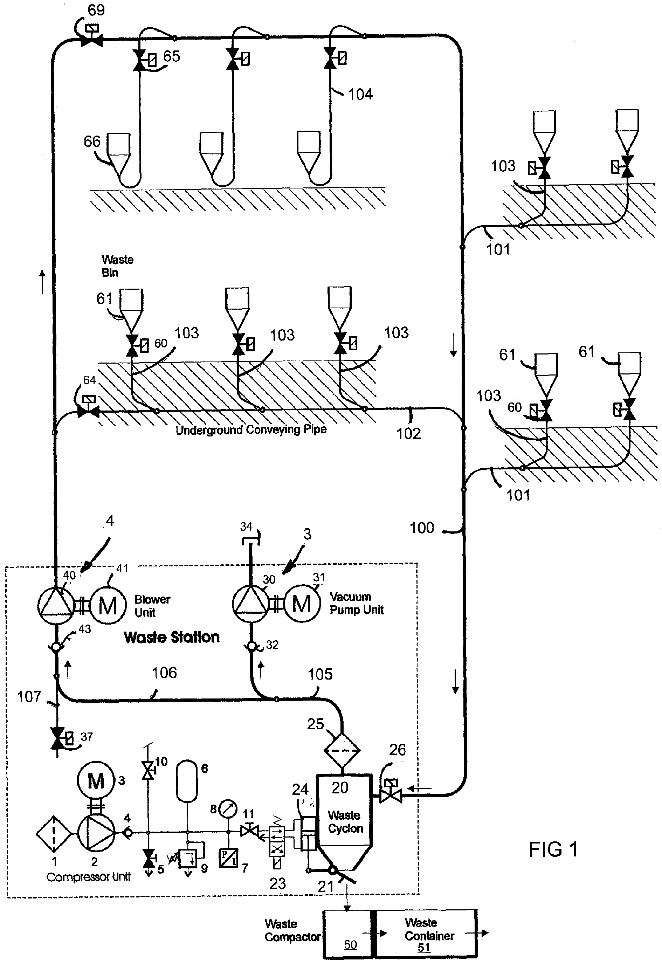

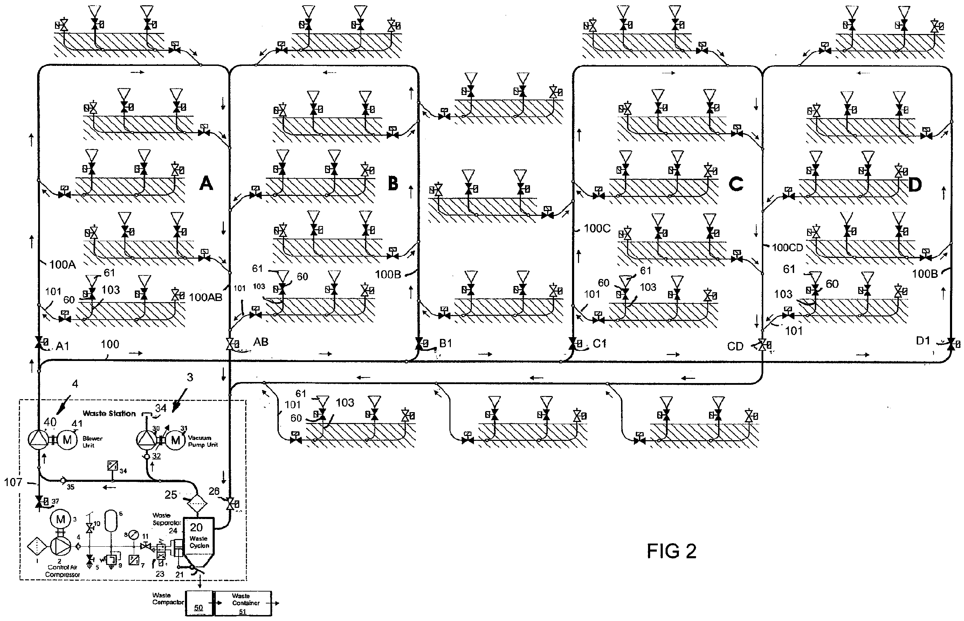

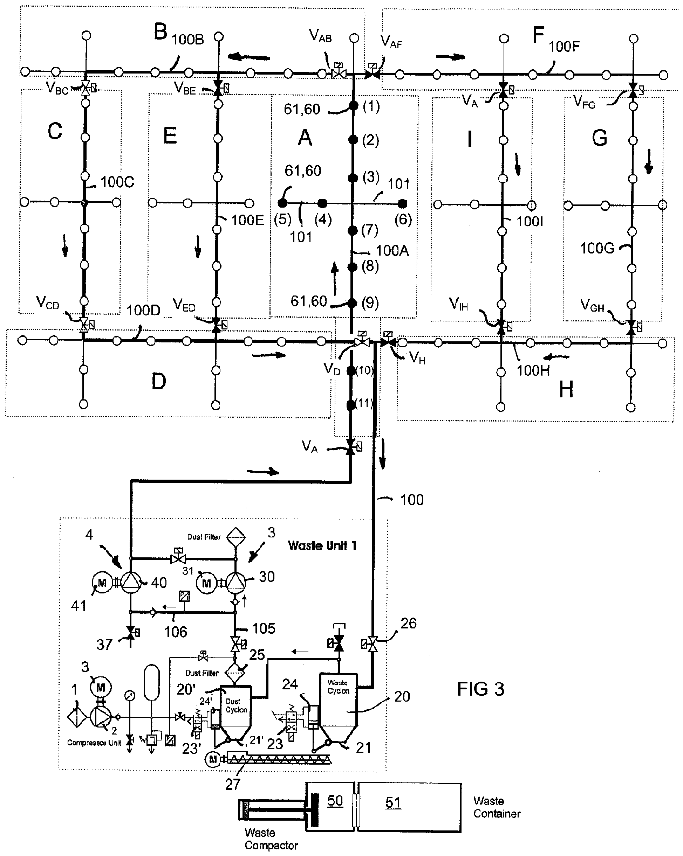

Fig. 1 schematically shows a pneumatic material conveying system, particularly a waste material conveying system. Figs. 1 and 2 show the underlying basic principles of the material conveying system of the invention and Fig. 3 shows an embodiment of the invention.

In Fig. 1, reference number 61, 66 designates a feed station of materials, particularly of waste material, intended to be conveyed, from which station material, particularly waste material, such as household waste, intended to be conveyed is fed to the conveying system. The system comprises several feed stations 61, 66 from which the material intended to be conveyed is fed to a conveying piping 100, 101, 102, 103, 104. The conveying piping comprises a main conveying pipe 100 into which several branch conveying pipes 101, 102 are connected and into which again several feed stations 61, 66 are connected via feed pipes 103, 104. The fed material is conveyed along the conveying piping 100, 101, 102, 103, 104 to a separator device 20 in which the material being conveyed is separated, e.g. due to dropping rate and centrifugal force, from conveying air. The separated material is removed, e.g. when required, from the separator device 20 to a material container, such as a waste container 51, or to further treatment. The material container can comprise, as in the embodiment of the figures, a waste compactor 50 from which the material is further conveyed to the waste container 51. In the embodiment of Fig. 1, the separator device 20 is provided with material outlet elements 21, 24. From the separating device 20, a pipe 105 leads to means 3 for generating underpressure in the conveying pipe. In the embodiment of Fig. 1, the means for generating underpressure comprise a vacuum pump unit 3. With the means for generating underpressure, underpressure required for conveying the material is provided in the conveying piping 100, 101, 102, 103, 104. The vacuum pump unit 3 comprises a pump 30 which is operated by an actuator 31.

According to the invention, the system further comprises a blower unit 4 which is connected in the embodiment of the figure from the blowing side to the conveying pipe 100. The conveying pipe 100 is a section of a circuit which in the embodiment of the figure consists of the main conveying pipe 100, the separator device 20 and the pipes 105 and 106. The blower unit 4 comprises a blower 40 and its actuator 41. The blower 40 of the blower unit 4 is arranged from the suction side to the pipe 105, 106 coming from the separating device 20. The conveying pipe 100 is thus connected to the blower 40 on its blowing side. In the main conveying pipe is arranged at least one valve element 69 typically between the blower 40 of the blower unit 4 and the feed pipes 103 and/or branch conveying pipes 101, 102 in the blowing direction of the blower 40. The blower also generates underpressure together with the vacuum generator.

The valve element 64 and 69 being in the closed position, the blower 40 raises pressure to a section between the blower and the valve element 69 in the conveying pipe 100. Equivalently in a section of the circuit on the suction side of the vacuum generator 3 and/or the blower 40, when travelling against the conveying direction and/or the air flow direction, which comprises in the embodiment of the figure the pipes 105, 106, the separator device 20 and a section of the main conveying pipe 100 from the separating device as far as the valves 69, underpressure prevails when the valves 69, 64 and the valves 60, 65 of the feed stations 61, 66 to the conveying pipe are closed.

In the embodiment of Fig. 1, the branch conveying pipe 102 extends from the pressure side of the main conveying pipe 100 to the suction side of the main conveying pipe i.e. forms a section of a smaller circuit. In the branch conveying pipe 102, at its end on the side of the pressure side of the main conveying pipe, is arranged the valve 64. The valve 64 of the branch conveying pipe being open and the valve 69 of the main conveying pipe being closed, a smaller circuit is formed in the embodiment of the figure in which air circulates from the blower 40 from the pressure side of the main conveying pipe via the branch conveying pipe 102 to the suction side of the main conveying pipe and further via the separator device to the pipe 105 and 106. When the vacuum pump unit runs, part of air circulating in the circuit is led to an outlet 34.

In the embodiment according to Fig. 1, into the main conveying pipe 100 are connected two first branch conveying pipes 101. In the figure, into both first branch conveying pipes 101 are connected two feed stations 61. Into the second branch conveying pipe 102 are connected three feed stations 61 by means of feed pipes 103. However, there can be more of them, e.g. 20. They can be opened and the material conveyed to the conveying pipe stepwise, first the one closest in relation to the separator device, then the next closest etc.

In the upper part of the figure, there are further three feed stations 66 connected directly to the main conveying pipe via feed pipes 104.

The sum of suctions provided by the vacuum unit 3 and the blower unit 4 to the conveying pipe 100, in the figure from the side of the separator device, is greater than the blowing provided by the blower unit, whereby conveyance takes place in underpressure. With the blower 40, it is typically possible to provide pressure which is e.g. in the range of 0.1-0.5 bar. With the vacuum generators, it is again typically possible to provide underpressure which is e.g. in the range of 0.1-0.5 bar. The blowing stores energy (i.e. overpressure) in the section of the conveying pipe 100 between the blower 40 and the valve 69 (and the valve 64) along with the rise of pressure, when the valves 69, 64 are closed, e.g. +0.5 bar. The suction of the vacuum unit 3 stores on the other side i.e. to the section of the valve 69 and the separator device 20 (and the pipe 105) underpressure which is e.g. -0.5 bar. When at least one of the valves 69, 64 opens, the pressure difference can then be even 1 bar. The suction being greater than blowing, underpressure is provided in the piping, whereby waste can be sucked inside the piping from a funnel of the feed station 61.

The suction being greater than the blowing, which is the target in the system according to the invention, material fed to the conveying pipe, particularly waste material, will not be compressed and compacted, but will be able to travel "freely" in the pipe conveyed by conveying air. Then, the potential of the material being conveyed to form blockages is considerably lower than in a situation in which the blowing is greater than the suction, whereby there is a risk that the material being conveyed will accumulate and block the conveying pipe. Furthermore, underpressure decreases the power required to convey the material, because even partial underpressure in relation to the material portion being conveyed on the side of the conveying direction considerably decreases air drag, among others. In the figure, arrows designate the direction of motion of air in the piping in the operating mode.

In conveying material, such as conveying waste material, when the material of the feed point is first conveyed by suction via the feed pipe 101, 103 or 104 to the conveying pipe, extremely fast acceleration and conveyance are provided for the material.

The conveying power provided by the pressure difference can then be e.g. in a pipe of a diameter of 400 mm about in the range of 12.32 kN (1,256 kp). The pressure side of the conveying pipe 100, i.e. in the example of the figure the section between the blower 40 and the valve 69, 64, can be substantially smaller of its diameter than the suction side of the conveying pipe, i.e. typically at least the section between the valve 69, 64 and the separator device 20. The pressure side can then be formed more advantageous of its diameter and costs.

In the embodiment of the figure, in the pipe 106 on the suction side of the blower is formed a fitting 107 in which there is a valve 37 by opening of which extra air can be brought on the suction side of the blower 4 from outside the circuit. By opening the valve 37, it is possible to raise the pressure of air in the conveying pipe if required and to provide an increased conveying rate for conveying the material.

To the feed pipes 103, 104 is arranged the outlet valve 60, 65 which is opened and closed so that material portions of suitable size are conveyed from the feed point 61, 66 to the branch conveying pipe 101, 102 or directly to the main conveying pipe 100. Material is fed from the feed point 61, 66, such as a waste container, when after the container is full, the outlet valve 60, 65 is opened either automatically or manually.

The system typically operates as follows: An outlet hatch 21 of the separator device 20 is closed and a valve 26 between the main conveying pipe 100 and the separator device 20 is open. The vacuum pump unit 3 and/or the blower unit 4 maintains underpressure in the main conveying pipe 100. A suction effect provided by the vacuum unit 3 and the blower unit 4 together via the separator device 20 to the conveying pipe 100 is greater than a pressure effect provided by the blower unit 4 to the conveying pipe 100 at its one end i.e. to the blowing side, to the section between the blower 40 and the valve 69 or the valve 64.

All outlet valves 60, 65 in the vicinity of the feed points i.e. waste containers are closed. In the start situation, the area valve 64 of the branch conveying pipe 102 and the line valve 69 of the main conveying pipe 100 are closed.

Let us assume that a waste container of the feed point 61 belonging to the area of the first branch conveying pipe 101 is to be emptied. Based on an emptying signal, the outlet valve 60 is momentarily opened, e.g. for 2-10 seconds, whereby the material being conveyed, such as waste material, conveys from the effect of underpressure to the branch conveying pipe and further to the main conveying pipe 100. The outlet valve 60 is typically closed after a few seconds after the start situation. The vacuum pump unit 3 maintains desired underpressure and the blower unit 4 starts unless not already running. The valve 69 is opened, whereby in the piping is provided blowing i.e. an intensified pressure effect and suction effect which conveys the material portion being conveyed along the piping to the separator device 20.

When the separator device 20 is full, the valve 26 of the conveying pipe 100 closes and a control valve 23 opens, whereby the actuator 24 of the outlet hatch 21 of the separator device opens the outlet hatch 21 and the material accumulated in the separator device is emptied in the compactor device 50 and further in the waste container 51. The outlet hatch 21 of the separator device 20 is closed and the valve 26 opened.

After this, the start situation is reverted and the emptying process can be repeated or the emptying of some other feed point/feed points can be implemented.

The waste container 51, such as a waste freight container, is replaced or emptied when it is full.

In waste conveyance, it is possible to optimise air circulation and blowing so that the blowing is always directed as close as possible to the material portion being conveyed. If a material portion fed directly via the feed point 66 is being conveyed, first is opened the valve 69 in the main conveying pipe 100. After the material portion has passed the connecting point of the branch conveying pipe 102 and the main conveying pipe 100 in the case of the figure, the valve 64 of the branch conveying pipe is opened and the valve 69 of the main conveying pipe is closed, whereby the blowing effect directs at the material portion being conveyed as close as possible and the motion of the material portion can be best maintained in the conveying pipe.

The embodiment according to Fig. 2 schematically shows a more extensive system which comprises several partial circuits A, B, C, D. The system can comprise several circuits the air circulation of which is controllable by means of valve elements A1, B1, C1, D1, AB, CD arranged in pipings 100A, 100B, 100C, 100D, 100AB, 100CD of the partial circuits A, B, C, D. Then, the valves A1, B1, C1, D1 of the blowing side are first closed. The blower raises the pressure in the pipe section between the conveying pipe or a pipe being in connection with it and the valve A1, B1, C1, D1. Equivalently in the section of the circuit on the suction side of the vacuum generator 3 and/or the blower 40, when travelling against the conveying direction and/or the air flow direction, which comprises in the embodiment of the figure the pipes 105, 106, the separator device 20 and the section of the conveying pipes 100AB, 100CD from the separator device 20 to the valves A1, B1 and equivalently as far as C1, D1, underpressure prevails when the valves A1, B1, C1, D1 and the valves 60 of the feed stations 61 to the conveying pipe are closed. Part of the circuits can be out of air circulation and the air circulation is only controlled to those one or more circuits of the system from which the material is conveyed. Typically on the underpressure side in the start situation, the valves AB and CD to the partial circuits are open, but typically the valve of the circuit to be activated is kept open and the valve of the circuit to be non-activated is closed.

The system comprises a pipe network which includes four partial circuits A, B, C and D. Each partial circuit contains the pipelines 100A, 100B, 100C, 100D which are in the circulation direction of conveying air connectable from the inlet side to the pipeline 100 coming from the blower device 4 by opening and closing the valve elements A1, B1, C1, D1. In the embodiment of the figure, the conveying pipes 100A, 100B of the circuits A and B are combined as the conveying pipe 100AB which leads to the separator device 20. Equivalently, the conveying pipes 100C, 100D of the circuits C, D are combined as the conveying pipe 100CD which leads to the separator device 20. In the example of the figure, arrows designate the circulation of conveying air in the circuits in a situation in which the circuits are connected active. Equivalently, the material being conveyed travels in the direction of the arrows to the separator device from one of the material feed points arranged along the circuits.

The invention thus relates to a pneumatic material conveying system, particularly a waste conveying system, which conveying system comprises at least one feed point 61, 66 of material, particularly of waste material, a material conveying pipe 100, 101, 102 which is connectable to the feed point 61, 66, a separator device 20 in which the material being conveyed is separated from conveying air, and means 3, 4 for providing a pressure difference in the conveying pipe 100, 101, 102 at least during the conveyance of the material. At least a part of the conveying pipe 100 and conveying air channels 105, 106 is formed as at least one circuit in which the suction side of at least one vacuum generator 3 is connected. The system further comprises at least one blower 40 the suction side of which is connected to the air channel 105, 106 coming from the separator device 20 of the circuit and the blowing side to the conveying pipe 100 or a section of the circuit being in connection with or being connectable with the conveying pipe so that it is possible to circulate air with the blower 40 in said circuit, and in the circuit is arranged at least one valve element 69 between the blower 40 and at least one material feed point 61, 66. The valve divides the circuit into the pressure side and the suction side on which pressure side is providable overpressure, at least when the valve element 69 of the circuit is closed, and on the suction side underpressure. The valve 69 is arranged to open at least during the conveyance of the material.

The system can comprise several circuits the air circulation of which is controllable by means of the valve elements 69, 64 arranged in the partial circuits. Then, part of the circuits can be out of air circulation and the air circulation is only controlled to those circuits of the system from which the material is conveyed.

According to the invention, underpressure provided by devices 3, 4 generating underpressure of the circuit activated in the system i.e. suction in the material conveying pipe 100 or its section is greater than the pressure effect i.e. blowing provided by at least one blower 4.

According to a typical embodiment, the vacuum generator 3 is a vacuum pump.

According to another embodiment, the vacuum generator 3 is an ejector pump device. The ejector pump device can be e.g. a hydraulic ejector device, particularly an ejector device operated with liquid mist, whereby it decreases possible emissions of particles, impurities and odours of the system.

According to an advantageous embodiment of the invention, the main part of conveying air is circulated in the circuit. This is an extremely advantageous embodiment, because it considerably decreases the volume of outlet air of the system and, at the same time, emissions of particles and impurities.

According to an embodiment of the invention, only part of conveying air is led out of the circuit.

According to an embodiment of the invention, the vacuum pump unit 3 is arranged to provide basic underpressure in the conveying piping 100.

Typically, the blower device 4 is arranged to circulate conveying air in the circuit.

The vacuum generator 3 and/or the blower device 4 is arranged to intensify at least momentarily the conveying effect of material provided by at least one vacuum generator 3 and/or blower device 4 in the conveying piping 100, 101, 102. Typically, by the rise of pressure provided by the blower 40, it is possible to intensify the start-off of material and to increase the material conveying rate when the valve 69, 64 of the circuit is opened. Alternatively, it is possible to decrease the total power consumption.

According to an advantageous embodiment of the invention, the material conveying system is a waste conveying system.

According to an advantageous embodiment, the material feed points 61, 66 are advantageously waste feed points, such as waste bins or waste chutes.

In the embodiment of Fig. 1, the separator device 20, which is a so-called waste cyclone, the vacuum pump devices 3, the blower unit 4 and the compressor unit 1, which drives the emptying mechanism of the separator device, are located at the delivery end of material of the material conveying system i.e. particularly in a waste conveying system into connection with a waste station.

In a case according to the invention, the conveying pipe 100 is at least a section of a suction/blowing circuit, the output end and inlet end of which are advantageously arranged into connection with the waste station and in which the output end of the suction/blowing circuit is on the blowing side of the blower 40 and the inlet end on the suction side of the blower 40. The blower can then, the valve 69 being open, circulate air in the suction/blowing circuit a section of which is formed by the conveying pipe 100. The feed points 61, 66 can be located decentralised along the system pipings distributedly. In connection with the waste conveying system, the feed points can be e.g. waste bins or waste chutes.

In a case according to the invention, the conveying pipe 100 is at least a section of a suction/blowing circuit, the output end and inlet end of which are advantageously arranged into connection with the waste station and in which the output end of the suction/blowing circuit is on the blowing side of the blower 40 and the inlet end on the suction side of the blower 40. The blower can circulate air in the suction/blowing circuit a section of which is formed by the conveying pipe 100. The feed points 61, 66 can be located decentralised along the system pipings distributedly. In connection with the waste conveying system, the feed points can be e.g. waste bins or waste chutes.

Fig. 3 shows an advantageous embodiment of a system according to the invention. In the figure, the feed stations or feed points 61 and gate elements 60 in connection with them are diagrammatically designated along the conveying piping 100 with one circle. The feed point 61 typically comprises a feed container, such as a funnel, and the valve element 60 by which a connection from the feed point to the conveying pipe 100 is closed and opened. The system conveying piping 100 and the feed points 61 along with it are dividable by area valves V_{A}, V_{AB}, V_{BC}, V_{BE}, V_{BE},...etc. arranged in the conveying piping to operating areas A, B, C, D, E, F, G, H, I. In the figure, each part of the conveying piping 100 of the operating area is designated with the letter of the corresponding operating area, whereby at the point of the operating area A the conveying pipe is designated with 100A and at the point of operating area B the conveying pipe is designated with 100B. A corresponding designation is used for the other operating areas. The operation of the system is controlled so that, for emptying the feed points of a desired operating area, at least one valve is open in the material conveying direction in relation to the operating area of the conveying pipe 100 and on the supply side of the conveying air i.e. on the side of suction, whereby the suction is able to affect the conveying pipe of the operating area. Let us assume that, in the arrangement according to the figure, the feed points 61 of the area A are to be emptied. Then, all area valves between the separator device 20 and the operating area A in the conveying pipe 100 (the sections 100B, 100C, 100D of the conveying pipe in the figure) in the conveying direction are open (the valves V_{AB}, V_{BC}, V_{CD}, V_{D} in the figure). Then, suction provided by at least one vacuum generator 3 prevails in the conveying piping 100A in the operating area A. At least one valve V_{A} on the blowing side of the conveying pipe 100A is closed, whereby only suction prevails in the operating area A. The feed points 61 of the operating area or at least part of them are emptied so that the connection of the feed point 61 (1) closest to the delivery end in the conveying direction of the conveying pipe, i.e. in the embodiment according to the figure closest to the separator device 20, to the conveying pipe 100A is opened first, whereby the material is able to convey from the first feed point to the conveying pipe, and before the connection of the first feed point (1) to the conveying pipe closes, the connection of the next feed point 61 (2) to the conveying pipe is opened. In the embodiment of the figure, this is, when travelling against the material conveying direction, the next feed point 61 (2) intended to be emptied. After this, the connection of the first feed point 61 (1) is closed to the conveying pipe. Equivalently, the connection of the third feed point 61 (3) intended to be emptied to the conveying pipe is opened before the connection of the second feed point 61 (2) to the conveying pipe is closed. This operation is repeated until all desired feed points have been emptied. In the figure, it has been considered emptying all the feed points 61 of the area A, whereby their emptying sequence to the conveying pipe 100, 100A is designated in the figure by numerals within parentheses: (1), (2), (3), (4), (5), (6), (7), (8), (9), (10), and (11).

When the passage of the last feed point 61 (11) intended to be emptied in the operating area A to the conveying pipe 100 has been opened, the material has conveyed to the conveying pipe 100, 100A and the passage of the feed point to the conveying pipe is closed, a connection is opened in the conveying pipe 100A of the operating area A from the blowing side i.e. the blower 4 by opening at least one valve element V_{A} which is between the operating area A and the blower device 4 blowing to the conveying pipe 100. Then, an intensified conveying effect (suction and blowing together) is provided for the material being conveyed transferred in the conveying pipe 100, 100A, 100B, 100C, 100D. The conveying air circulates on a route designated with arrows in the figure, whereby material portions conveyed from the feed points to the conveying pipe convey in the conveying piping on the route, in the example of the figure, which passes the areas B, C and D, and further to the separator device 20 in which the material being conveyed is separated from conveying air. In the figure, the area valves V_{BE} and V_{ED} of the conveying pipe 100E of the operating area E are closed, whereby conveying air and material being conveyed are not able to access the conveying pipe 100E of the operating area E but circulate via the conveying pipe 100C of the area C. In connection with the emptying of different operating areas, the material conveying route from the operating area to a delivery station, such as to the separator device 20, can be optimised by keeping the area valves open along the desired conveying route.

Material is conveyed in the conveying pipe to the separator device 20. The separator device 20 is emptied when required, e.g. to the material container 51, in connection with which there can be the compactor device 50. In the system according to the figure, a second separator device 20' is further arranged in the conveying air channel after the separator device for separating smaller particles from conveying air. The particles separated by the second separator device 20' can be conveyed e.g. by a conveyor to the material container 51. The second separator device is followed in the conveying air channel in the air circulation direction by a filter element for removing small particles from conveying air. The air channel is connected on the suction side of the vacuum generator 3 and the conveying air channel branches before the vacuum generator 3 to a second conveying air channel which is connected on the suction side of the blower device 4. The blowing side of the blower device is connected directly or via the air channel to the conveying pipe 1000. The conveying piping 100 comprises at least one circuit in which conveying air can be circulated from the blowing side of the blower via the separator device 20 on the suction side. It is possible to regulate with the valves which one or ones of the operating areas A, B, C, D, E, F, G, H, I are connected to the active conveying circuit of the conveying pipe 100.

The invention thus relates to a method according to claim 1.

In accordance with an advantageous embodiment according to the invention, in the method, the system is divided in at least two operating areas and the emptying of at least part of the feed points 61 of at least one operating area A, B, C, D, E, F, G, H, I to the material conveying pipe 100, 100A, 100B, 100C, 100D, 100E, 100F, 100G, 100H, 100! is controlled in a sequence in which first is opened a connection of the first feed point 61 (1) intended to be emptied of the operating area to the conveying pipe, and before the connection of the previous feed point to the conveying pipe is closed, a connection of the next feed point 61 (2) to the conveying pipe is opened, the connection of the previous feed point 61 (1) to the conveying pipe is closed, the emptying of the feed points of the operating area is continued as far as the desired feed points (1)... (11) of the operating area have been emptied in the conveying pipe and the connection of the last feed point (11) to the conveying pipe is closed.

In an embodiment of the method according to the invention, one moves to the next operating area to be handled after the feed points of the previous operating area have been emptied, and the emptying sequence of the feed points is repeated in the next operating area.

The feed points of the operating area A, B, C, D, E; F, G, H, I are emptied to the conveying pipe in a reverse sequence (1), (2)... (10), (11) in relation to the conveying direction.

According to an embodiment of the invention, conveying air circulation and material conveyance in the system is controlled by opening and closing one or more area valves V_{A}, V_{AB}, V_{BC}, V_{BE}, V_{BE}, ... V_{H} arranged in the conveying piping 100, 100A, 100B, 100C, 100D, 100E, 100F, 100G, 100H, 100!.

In accordance with an embodiment of a method according to the invention, at least the main part of the conveying air is circulated in the circuit a section of which is formed by the conveying piping 100, 100A, 100B, 100C, 100D, 100E, 100F, 100G, 100H, 100!.

According to an embodiment of the invention, the vacuum pump unit 3 is used for providing basic underpressure in the conveying piping 100.

In accordance with an embodiment of a method according to the invention, the vacuum generator 3 and/or the blower device 4 is arranged to intensify at least momentarily the conveying effect of material provided by at least one vacuum generator 3 and/or blower device 4 in the conveying piping 100, 100A, 100B, 100C, 100D, 100E, 100F, 100G, 100H, 100!.

According to an advantageous embodiment of the invention, the method is used in a waste conveying system.

In accordance with an advantageous embodiment of a method according to the invention, the material feed points 61, 66 are waste feed points, such as waste bins or waste chutes.

The invention also relates to a pneumatic material conveying system according to claim 8 which is arranged to use at least one method referred to in claims 1-7.

It is obvious to those skilled in the art that the invention is not limited to the embodiments described above, but it may be varied within the scope of the enclosed claims.

## Claims

1. A method for feeding and conveying material in a pneumatic material conveying system, such as a waste conveying system, which conveying system comprises at least two feed points (61) of material, particularly of waste material, a material conveying pipe (100) connected to the feed point (61) by means of at least one branch conveying pipe (101, 102) connected to at least one feed pipe (103, 104), a separator device (20) in which the material being conveyed is separated from conveying air, conveying air channels (105,106), and means (3, 4) for providing a pressure difference in the conveying pipe (100) at least during the conveyance of the material, wherein conveying air is circulated in a circuit which is formed by at least a part of the conveying pipe (100) and the conveying air channels (105, 106) in to which circuit the suction side of at least one vacuum generator (3) is connected and in which the suction side of at least one blower device (4) is connected to the conveying air channel (105, 106) coming from the separator device (20) of the circuit and the blowing side to the conveying pipe (100) or a section of the circuit in connection with the conveying pipe so that it is possible to circulate air with the blower device (4) in said circuit, providing underpressure in the conveying pipe (100) at least at the point of the feed point (61) intended to be emptied, arranging underpressure provided by the devices (3, 4) for generating underpressure of the circuit activated in the system i.e. suction in the material conveying pipe (100, 100A, 100B, 100C, 100D, 100E, 100F, 100G, 100H, 1001) greater than a pressure effect i.e. blowing provided by the at least one blower (4) device, emptying the feed points in the conveying pipe (100) using an emptying sequence in which first is emptied a feed point located closer the separator device (20) in the material conveying direction and next a feed point (61) located farther from the separator device (20) in the material conveying direction, and emptying the feed points in the conveying pipe (100) using said emptying sequence in which:
- opening a connection from the feed point (61) to the conveying pipe so that material conveys from the feed point to the conveying pipe,
- repeating the following steps until all desired feed points (61) have been emptied
∘ opening a connection at least from one next feed point to the conveying pipe,
∘ closing a connection from the previous feed point to the conveying pipe,
closing the connection of the last feed point to be emptied to the conveying pipe, and
- providing a blowing effect in the conveying pipe, whereby the blowing effect together with the suction effect convey the material in the conveying pipe to the separator device.

2. A method according to claim 1, **characterised by**, in the method, dividing the system in at least two operating areas and controlling the emptying of at least part of the feed points (61) of at least one operating area (A, B, C, D, E, F, G, H, I) to the material conveying pipe (100, 100A, 100B, 100C, 100D, 100E, 100F, 100G, 100H, 1001) in a sequence in which first is opened a connection of the first feed point (61) (1) intended to be emptied of the operating area to the conveying pipe and before the connection of the previous feed point to the conveying pipe is closed, a connection of the next feed point (61) (2) to the conveying pipe is opened, the connection of the previous feed point 61 (1) to the conveying pipe is closed, the emptying of the feed points of the operating area is continued until the desired feed points of the operating area have been emptied in the conveying pipe and the connection of the last feed point to the conveying pipe is closed.

3. A method according to claim 2, **characterised by** moving to the next operating area to be handled after having emptied the feed points of the previous operating area, and repeating the emptying sequence of the feed points in the next operating area.

4. A method according to any one of claims 1-3, **characterised by** controlling the conveying air circulation and the material conveyance in the system by opening and closing one or more area valves (V_{A}, V_{AB}, V_{BC}, V_{BE}, V_{BE},...etc.) arranged in the conveying piping (100, 100A, 100B, 100C, 100D, 100E, 100F, 100G, 100H, 1001) for dividing the conveying piping to operating areas.

5. A method according to any one of claims 1-4, **characterised by** arranging the vacuum generator (3) and/or the blower device (4) to intensify at least momentarily the conveying effect of material provided by at least one vacuum generator (3) and/or blower device (4) in the conveying piping (100, 100A, 100B, 100C, 100D,...100I).

6. A method according to any one of claims 1-5 **characterised by** using the method in a waste conveying system.

7. A method according to any one of claims 1-6, **characterised in that** the material feed points (61, 66) are waste feed points, such as waste bins or waste chutes.

8. A pneumatic material conveying system, which conveying system comprises at least two feed points (61) of material, particularly of waste material, a material conveying pipe (100) connected to the feed point by means of at least one branch conveying pipe (101, 102) connected to at least one feed pipe (103, 104), a separator device (20) configured to separate the material being conveyed from conveying air, conveying air channels (105,106), and means (3, 4) for providing a pressure difference in the conveying pipe (100) at least during the conveyance of the material, configured to circulate conveying air in a circuit which is formed by at least a part of the conveying pipe (100) and the conveying air channels (105, 106) in to which circuit the suction side of at least one vacuum generator (3) is configured to be connected and in which the suction side of at least one blower device (4) is configured to be connected to the conveying air channel (105, 106) coming from the separator device (20) of the circuit and the blowing side to the conveying pipe (100) or a section of the circuit in connection with the conveying pipe so that it is possible to circulate air with the blower device (4) in said circuit, and configured to provide underpressure in the conveying pipe (100) at least at the point of the feed point (61) intended to be emptied, configured to arrange underpressure provided by the devices (3, 4) for generating underpressure of the circuit activated in the system such that suction in the material conveying pipe (100, 100A, 100B, 100C, 100D, 100E, 100F, 100G, 100H, 100!) is greater than a pressure effect i.e. blowing provided by the at least one blower (4) device, wherein the system is also configured to empty the feed points in the conveying pipe (100) using an emptying sequence in which first is emptied a feed point located closer the separator device (20) in the material conveying direction and next a feed point (61) located farther from the separator device (20) in the material conveying direction, which conveying system is arranged to use a method according to at least one of claims 1-7.

## Patentansprüche

1. Verfahren zum Zuführen und Fördern von Material in einem pneumatischen Materialfördersystem, wie z.B. einem Abfallfördersystem, wobei das Fördersystem mindestens zwei Zuführstellen (61) für Material, insbesondere für Abfallmaterial, aufweist, eine Materialförderleitung (100), die mit der Zuführstelle (61) über mindestens eine Abzweigförderleitung (101, 102) verbunden ist, die mit mindestens einer Zuführleitung (103, 104) verbunden ist, eine Separatoreinrichtung (20), in der das geförderte Material von Förderluft getrennt wird, Förderluftkanäle (105, 106), und Mittel (3, 4) zum Bereitstellen einer Druckdifferenz in der Förderleitung (100) zumindest während der Förderung des Materials, wobei die Förderluft in einem Kreislauf zirkuliert wird, der durch zumindest einen Teil der Förderleitung (100) und die Förderluftkanäle (105, 106) gebildet wird, in welchem Kreislauf die Saugseite mindestens eines Vakuumerzeugers (3) angeschlossen ist und in welchem die Saugseite mindestens einer Gebläseeinrichtung (4) mit dem von der Separatoreinrichtung (20) des Kreislaufs kommenden Förderluftkanal (105, 106) und die Gebläseseite mit der Förderleitung (100) oder einem Abschnitt des Kreislaufs in Verbindung mit der Förderleitung verbunden ist, so dass es möglich ist, Luft mit der Gebläseeinrichtung (4) in diesem Kreislauf zu zirkulieren, Bereitstellen von Unterdruck in der Förderleitung (100) zumindest an der zu entleerenden Zuführstelle (61), Anordnen von Unterdruck, der von den Einrichtungen (3, 4) zur Erzeugung von Unterdruck des im System aktivierten Kreislaufs bereitgestellt wird, d. h. Ansaugen in der Materialförderleitung (100, 100A, 100B, 100C, 100D, 100E, 100F, 100G, 100H, 1001) größer als eine Druckwirkung, d. h. Blasen durch die mindestens eine Gebläseeinrichtung (4), Entleeren der Zuführstellen in der Förderleitung (100) unter Verwendung einer Entleerungsreihenfolge, bei der zunächst eine in Materialförderrichtung näher an der Separatoreinrichtung (20) liegende Zuführstelle und anschließend eine in Materialförderrichtung weiter von der Separatoreinrichtung (20) entfernte Zuführstelle (61) entleert wird, und Entleeren der Zuführstellen in der Förderleitung (100) unter Verwendung der Entleerungsreihenfolge, die Folgendes vorsieht:
- Öffnen einer Verbindung von der Zuführstelle (61) zur Förderleitung, so dass Material von der Zuführstelle zur Förderleitung gefördert wird,
- Wiederholen der folgenden Schritte, bis alle gewünschten Zuführstellen (61) entleert sind
- Öffnen einer Verbindung mindestens von einer nächsten Zuführstelle zur Förderleitung,
- Schließen einer Verbindung von der vorherigen Zuführstelle zur Förderleitung, Schließen der Verbindung der letzten zu entleerenden Zuführstelle zur Förderleitung, und
- Bereitstellen einer Ausblaswirkung in der Förderleitung, wobei die Ausblaswirkung zusammen mit der Saugwirkung das Material in der Förderleitung zur Separatoreinrichtung befördert.

2. Verfahren nach Anspruch 1, **dadurch gekennzeichnet, dass** bei dem Verfahren das System in mindestens zwei Betriebsbereiche unterteilt wird und die Entleerung mindestens eines Teils der Zuführstellen (61) mindestens eines Betriebsbereichs (A, B, C, D, E, F, G, H, I) zur Materialförderleitung (100, 100A, 100B, 100C, 100D, 100E, 100F, 100G, 100H, 1001) in einer Reihenfolge, in der zuerst eine Verbindung der ersten Zuführstelle (61) (1), die dazu bestimmt ist, aus dem Betriebsbereich entleert zu werden, mit der Förderleitung geöffnet wird und bevor die Verbindung der vorherigen Zuführstelle mit der Förderleitung geschlossen wird, eine Verbindung der nächsten Zuführstelle (61) (2) zur Förderleitung geöffnet wird, die Verbindung der vorherigen Zuführstelle 61 (1) zur Förderleitung geschlossen wird, die Entleerung der Zuführstellen des Betriebsbereiches fortgesetzt wird, bis die gewünschten Zuführstellen des Betriebsbereiches in der Förderleitung entleert sind und die Verbindung der letzten Zuführstelle zur Förderleitung geschlossen wird.

3. Verfahren nach Anspruch 2, **dadurch gekennzeichnet, dass** nach dem Entleeren der Zuführstellen des vorherigen Arbeitsbereichs zum nächsten zu bearbeitenden Arbeitsbereich gegangen wird und die Entleerungsreihenfolge der Zuführstellen im nächsten Arbeitsbereich wiederholt wird.

4. Verfahren nach einem der Ansprüche 1 bis 3, **dadurch gekennzeichnet, dass** die Förderluftzirkulation und der Materialtransport im System durch Öffnen und Schließen eines oder mehrerer Bereichsventile (V_{A}, V_{AB}, V_{BC}, V_{BE}, V_{BE},... etc.) gesteuert werden, die in der Förderleitung (100, 100A, 100B, 100C, 100D, 100E, 100F, 100G, 100H, 1001) angeordnet sind, um die Förderleitung in Betriebsbereiche zu unterteilen.

5. Verfahren nach einem der Ansprüche 1 bis 4, **dadurch gekennzeichnet, dass** der Vakuumerzeuger (3) und/oder die Gebläseeinrichtung (4) so angeordnet wird, dass die von mindestens einem Vakuumerzeuger (3) und/oder einer Gebläseeinrichtung (4) in der Förderleitung (100, 100A, 100B, 100C, 100D,...100I) bereitgestellte Förderwirkung des Materials zumindest zeitweise verstärkt wird.

6. Verfahren nach einem der Ansprüche 1 bis 5, **dadurch gekennzeichnet, dass** das Verfahren in einem Fördersystem für Abfälle angewendet wird.

7. Verfahren nach einem der Ansprüche 1 bis 6, **dadurch gekennzeichnet, dass** die Zuführstellen (61, 66) für das Material Abfallzuführstellen sind, wie z. B. Abfallbehälter oder Abfallrutschen.

8. Pneumatisches Materialfördersystem, welches Fördersystem mindestens zwei Zuführstellen (61) für Material, insbesondere für Abfallmaterial, aufweist, eine Materialförderleitung (100), die mit der Zuführstelle über mindestens eine Abzweigförderleitung (101, 102) verbunden ist, die mit mindestens einer Zuführleitung (103, 104) verbunden ist, eine Separatoreinrichtung (20), die ausgestaltet ist, um das geförderte Material von der Förderluft zu trennen, Förderluftkanäle (105, 106), und Mittel (3, 4) zum Bereitstellen einer Druckdifferenz in der Förderleitung (100) zumindest während der Förderung des Materials, die ausgestaltet sind, um die Förderluft in einem Kreislauf zu zirkulieren, der durch zumindest einen Teil der Förderleitung (100) und die Förderluftkanäle (105, 106) gebildet wird, wobei in diesem Kreislauf die Saugseite mindestens eines Vakuumerzeugers (3) ausgestaltet ist, um angeschlossen zu werden, und wobei die Saugseite mindestens einer Gebläseeinrichtung (4) ausgestaltet ist, um mit dem Förderluftkanal (105, 106), der von der Separatoreinrichtung (20) des Kreislaufs kommt, und der Gebläseseite mit der Förderleitung (100) oder einem Abschnitt des Kreislaufs in Verbindung mit der Förderleitung verbunden zu werden, so dass es möglich ist, Luft mit der Gebläseeinrichtung (4) in diesem Kreislauf zu zirkulieren, und ausgestaltet ist, um einen Unterdruck in der Förderleitung (100) zumindest an der Stelle der Zuführstelle (61), die entleert werden soll, vorzusehen, ausgestaltet ist, um einen Unterdruck, der durch die Einrichtungen (3, 4) zum Erzeugen eines Unterdrucks des in dem System aktivierten Kreislaufs bereitgestellt wird, so anzuordnen, dass ein Ansaugen in der Materialförderleitung (100, 100A, 100B, 100C, 100D, 100E, 100F, 100G, 100H, 1001) größer ist als eine Druckwirkung, d. h. Ausblasen, das durch die mindestens eine Gebläseeinrichtung (4) breteitgestellt wird, wobei das System auch ausgestaltet ist, um die Zuführstellen in der Förderleitung (100) unter Verwendung einer Entleerungsreihenfolge zu entleeren, bei der zuerst eine Zuführstelle, die in der Materialförderrichtung näher an der Separatoreinrichtung (20) angeordnet ist, und als nächstes eine Zuführstelle (61), die in der Materialförderrichtung weiter von der Separatoreinrichtung (20) entfernt angeordnet ist, entleert wird, wobei das Fördersystem so eingerichtet ist, dass es ein Verfahren gemäß mindestens einem der Ansprüche 1 bis 7 verwendet.

## Revendications

1. Procédé pour introduire et transporter des matières dans un système de transport de matières pneumatique, tel qu'un système de transport de déchets, lequel système de transport comprend au moins deux points d'alimentation (61) de matières, en particulier de matières de déchets, un conduit de transport de matières (100) raccordé au point d'alimentation (61) au moyen d'au moins un conduit de transport ramifié (101, 102) raccordé à au moins un conduit d'alimentation (103, 104), un dispositif séparateur (20) dans lequel les matières transportées sont séparées d'un air de transport, des canaux (105, 106) d'air de transport, et un moyen (3, 4) pour produire une différence de pression dans le conduit de transport (100) au moins pendant le transport des matières, dans lequel l'air de transport est mis en circulation dans un circuit qui est formé par au moins une partie du conduit de transport (100) et des canaux (105, 106) d'air de transport, circuit dans lequel est raccordé le côté aspiration d'au moins un générateur de vide (3) et dans lequel le côté aspiration d'au moins un dispositif de soufflage (4) est raccordé au canal (105, 106) d'air de transport provenant du dispositif séparateur (20) du circuit et le côté soufflage au conduit de transport (100) ou à une section du circuit en raccordement avec le conduit de transport, de sorte qu'il est possible de faire circuler de l'air avec le dispositif de soufflage (4) dans ledit circuit, produisant une sous-pression dans le conduit de transport (100) au moins au niveau du point du point d'alimentation (61) destiné à être vidé, mettant en place une sous-pression produite par les dispositifs (3, 4) afin de générer une sous-pression du circuit activé dans le système, c'est-à-dire une aspiration dans le conduit (100, 100A, 100B, 100C, 100D, 100E, 100F, 100G, 100H, 100I) de transport de matières supérieure à un effet de pression, c'est-à-dire un soufflage produit par l'au moins un dispositif de soufflage (4), vidant les points d'alimentation dans le conduit de transport (100) en utilisant une séquence de vidage dans laquelle est vidé tout d'abord un point d'alimentation situé plus près du dispositif séparateur (20) dans la direction de transport de matières, puis un point d'alimentation (61) situé plus loin du dispositif séparateur (20) dans la direction de transport de matières, et vidant les points d'alimentation dans le conduit de transport (100) à l'aide de ladite séquence de vidage dans laquelle :
- ouvrir une connexion allant du point d'alimentation (61) au conduit de transport de telle sorte que les matières soient transportées du point d'alimentation au conduit de transport,
- répéter les étapes suivantes jusqu'à ce que tous les points d'alimentation (61) souhaités aient été vidés
o ouvrir une connexion allant au moins d'un point d'alimentation suivant jusqu'au conduit de transport,
o fermer une connexion allant du point d'alimentation précédent jusqu'au conduit de transport,
fermer la connexion du dernier point d'alimentation à vider jusqu'au conduit de transport, et
- produire un effet de soufflage dans le conduit de transport, moyennant quoi l'effet de soufflage, conjointement avec l'effet d'aspiration, transporte les matières dans le conduit de transport vers le dispositif séparateur.

2. Procédé selon la revendication 1, **caractérisé par**, dans le procédé, la division du système en au moins deux zones d'opération et la commande du vidage d'au moins une partie des points d'alimentation (61) d'au moins une zone d'opération (A, B, C, D, E, F, G, H, I) vers le conduit de transport de matières (100, 100A, 100B, 100C, 100D, 100E, 100F, 100G, 100H, 100I) dans une séquence dans laquelle tout d'abord est ouvert un raccord du premier point d'alimentation (61) (1) destiné à être vidé de la zone d'opération vers le conduit de transport et avant la fermeture du raccord du point d'alimentation précédent au conduit de transport, un raccord du point d'alimentation suivant (61) (2) au conduit de transport est ouvert, le raccord du point d'alimentation précédent 61 (1) au conduit de transport est fermé, le vidage des points d'alimentation de la zone d'opération est poursuivi jusqu'à ce que les points d'alimentation souhaités de la zone d'opération aient été vidés dans le conduit de transport et que le raccord du dernier point d'alimentation au conduit de transport soit fermé.

3. Procédé selon la revendication 2, **caractérisé par** le déplacement vers la zone d'opération suivante devant être mis en oeuvre après avoir vidé les points d'alimentation de la zone d'opération précédente, et la répétition de la séquence de vidage des points d'alimentation dans la zone d'opération suivante.

4. Procédé selon l'une quelconque des revendications 1 à 3, **caractérisé par** la commande de la circulation d'air de transport et du transport de matières dans le système par l'ouverture et la fermeture d'une ou plusieurs vannes de zone (V_{A}, V_{AB}, V_{BC}, V_{BE}, V_{BE}, ... etc) disposées dans le conduit de transport (100, 100A, 100B, 100C, 100D, 100E, 100F, 100G, 100H, 100I) pour diviser le conduit de transport en zones d'opération.

5. Procédé selon l'une quelconque des revendications 1 à 4, **caractérisé par** l'agencement du générateur de vide (3) et/ou du dispositif de soufflage (4) pour intensifier au moins momentanément l'effet de transport de matières produit par au moins un générateur de vide (3) et/ou un dispositif de soufflage (4) dans le conduit de transport (100, 100A, 100B, 100C, 100D, ... 100I).

6. Procédé selon l'une quelconque des revendications 1 à 5, **caractérisé par** l'utilisation du procédé dans un système de transport de déchets.

7. Procédé selon l'une quelconque des revendications 1 à 6, **caractérisé en ce que** les points d'alimentation de matières (61, 66) sont des points d'alimentation de déchets, tels que des bacs à déchets ou des vide-ordures.

8. Système de transport de matières pneumatique, lequel système de transport comprend au moins deux points d'alimentation (61) de matières, en particulier de matières de déchets, un conduit (100) de transport de matières raccordé au point d'alimentation au moyen d'au moins un conduit de transport ramifié (101, 102) raccordé à au moins un conduit d'alimentation (103, 104), un dispositif séparateur (20) configuré pour séparer les matières transportées de l'air de transport, des canaux (105, 106) d'air de transport, et un moyen (3, 4) pour produire une différence de pression dans le conduit de transport (100) au moins pendant le transport des matières, configurés pour faire circuler de l'air de transport dans un circuit qui est formé par au moins une partie du conduit de transport (100) et des canaux (105, 106) d'air de transport, circuit dans lequel le côté aspiration d'au moins un générateur de vide (3) est configuré pour être raccordé et dans lequel le côté aspiration d'au moins un dispositif de soufflage (4) est configuré pour être raccordé au canal (105, 106) d'air de transport provenant du dispositif séparateur (20) du circuit et le côté soufflage au conduit de transport (100) ou à une section du circuit en raccordement avec le conduit de transport, de telle sorte qu'il est possible de faire circuler de l'air avec le dispositif de soufflage (4) dans ledit circuit, et configuré pour produire une sous-pression dans le conduit de transport (100) au moins au niveau du point du point d'alimentation (61) destiné à être vidé, configuré pour mettre en place une sous-pression produite par les dispositifs (3, 4) pour générer une sous-pression du circuit activé dans le système, de telle sorte que l'aspiration dans le conduit (100, 100A, 100B, 100C, 100D, 100E, 100F, 100G, 100H, 100I) de transport de matières soit supérieure à un effet de pression, c'est-à-dire le soufflage produit par l'au moins un dispositif de soufflage (4), dans lequel le système est également configuré pour vider les points d'alimentation dans le conduit de transport (100) en utilisant une séquence de vidage dans laquelle est vidé tout d'abord un point d'alimentation situé plus près du dispositif séparateur (20) dans la direction de transport de matières, et puis un point d'alimentation (61) situé plus loin du dispositif séparateur (20) dans la direction de transport de matières, lequel système de transport est conçu pour utiliser un procédé selon au moins l'une des revendications 1 à 7.
